# EUROPÄISCHE PATENTSCHRIFT

(11) **EP 4 182 591 B1**
(45) Veröffentlichungstag und Bekanntmachung des Hinweises auf die Patenterteilung: **05.06.2024**
(21) Anmeldenummer: 21739664.7
(22) Anmeldetag: 05.07.2021
(51) Int. Cl.: F16L 25/14, F16L 27/107, F16L 21/00

(54) **VERBINDUNGSVORRICHTUNG**
CONNECTING DEVICE
DISPOSITIF DE RACCORDEMENT

(30) Priorität: 17.07.2020 DE 202020104140 U
(43) Veröffentlichungstag der Anmeldung: 24.05.2023
(73) Patentinhaber: REHAU Industries SE & Co. KG, 95111 Rehau (DE)
(72) Erfinder: LIPPHARDT, Tobias, 91334 Hemhofen (DE); SIEBER, Jürgen, 91074 Herzogenaurach (DE)
(86) Internationale Anmeldenummer: PCT/EP2021/068495
(87) Internationale Veröffentlichungsnummer: WO 2022/012990

(56) Entgegenhaltungen:
- DE-A1-102012 101 553
- US-A1- 2009 160 183

## Beschreibung

### Hintergrund der Erfindung

Die vorliegende Erfindung betrifft eine Verbindungsvorrichtung zum Anpressen einer Dichtmanschette an ein erstes und ein zweites Rohr und eine Anordnung mit einer derartigen Verbindungsvorrichtung.

Insbesondere zur Herstellung einer Verbindung von zwei Abwasserrohren ist es bekannt, Rohrendabschnitte der beiden Rohre über eine Dichtmanschette zu verbinden und zum Sichern bzw. Festigen der Verbindung, ein Hilfsmittel zum Anpressen der Dichtmanschette an die beiden Rohre vorzusehen.

Dazu wird in der Regel die Dichtmanschette mittels Spannbändern bzw. Spannschellen an die zu verbindenden Rohre angepresst.

Insbesondere im Abwasserbereich ist es oft erforderlich, zwei Rohre mit unterschiedlichen Außendurchmessern zu verbinden. So ist aus der DE10 2012 10 15 53 wie auch der US 2009 160 183 bekannt, zum Anpressen einer Dichtmanschette an die beiden Rohre eine Manschette vorzusehen, die mittels Spannbändern zum Anpressen an die Dichtmanschette zusammenziehbar ist, wobei die Konstruktion der Manschette eine Anpassung an die unterschiedlichen Außendurchmesser möglich macht.

Bei der Verbindung von Rohren mit sehr unterschiedlichen Außendurchmessern stößt diese Lösung an ihre Grenzen, da es auf Grund der starken mechanischen Belastung der Manschette am Übergang der sehr unterschiedlichen Außendurchmesser der Rohre an deren Verbindungsstelle zu Undichtigkeiten oder sogar zum Bruch der Manschette kommen kann.

### Zugrundeliegende Aufgabe

Gegenüber der bekannten Lösung ist es Aufgabe der vorliegenden Erfindung, eine verbesserte Verbindungsvorrichtung anzugeben, mit der das Anpressen einer Dichtmanschette an ein erstes und ein zweites Rohr sehr unterschiedlichen Außendurchmessers einfach möglich ist, wobei eine sichere Fluiddichtheit erzielt werden soll. Hierbei können die Rohre unterschiedliche Außendurchmesser bzw. unterschiedliche Außenkonturen aufweisen.

Weiterhin soll eine Anordnung mit einer derartigen Verbindungsvorrichtung angegeben werden.

### Erfindungsgemäße Lösung

Die erste Aufgabe wird erfindungsgemäß mit einer Verbindungsvorrichtung gelöst, bei der eine Dichtmanschette an ein erstes und ein zweites Rohr sehr unterschiedlichen Außendurchmessers angepresst wird, wobei die Verbindungsvorrichtung die Merkmale des Anspruchs 1 aufweist.

Mit einer Anordnung mit den Merkmalen des Anspruchs 8 ist die zweite Aufgabe gelöst.

Erfindungsgemäß ist zur Lösung der ersten Aufgabe vorgesehen, eine Verbindungsvorrichtung bereitzustellen, mit der eine Dichtmanschette an ein erstes und ein zweites Rohr anpressbar ist.

Die Verbindungsvorrichtung ist dabei wie folgt erfindungsgemäß ausgebildet:
Die Verbindungsvorrichtung zum Verbinden eines ersten und eines zweiten Rohrs umfasst eine Dichtmanschette, eine Mehrzahl von Stützelementen und wenigstens zwei Spannbänder. Zum Bilden der Verbindung nimmt ein erster von zwei Endabschnitten der Dichtmanschette einen Rohrendabschnitt des ersten Rohrs auf, und der zweite Endabschnitt einen Rohrendabschnitt des zweiten Rohrs, die über die Dichtmanschette miteinander verbunden sind, wobei die Dichtmanschette eine Innenseite und eine Außenseite aufweist, und wobei die Mehrzahl von Stützelementen ohne miteinander verbunden zu sein entlang der Außenseite der Dichtmanschette angeordnet sind. Jedes Stützelement besteht wenigstens teilweise aus einem verformbaren Material oder ein enthält solches. Jedes Stützelement weist einen ersten Stützelementanpressabschnitt und einen zweiten Stützelementanpressabschnitt auf, wobei die ersten Stützelementanpressabschnitte entlang eines Umfangs eines ersten Kreises entlang der Außenseite der Dichtmanschette aufeinanderfolgend angeordnet sind und einen ersten Stützelementendabschnitt mit einer ersten Öffnung zur Aufnahme des ersten Endabschnitts der Dichtmanschette bilden, und wobei die zweiten Stützelementanpressabschnitte entlang eines Umfangs eines zweiten Kreises entlang der Außenseite der Dichtmanschette aufeinanderfolgend angeordnet sind und einen zweiten Stützelementendabschnitt mit einer zweiten Öffnung zur Aufnahme des zweiten Endabschnitts der Dichtmanschette bilden, wobei wenigstens ein erster Stützelementanpressabschnitt mit einem zweiten Stützelementanpressabschnitt durch wenigstens einen verformbaren Verbindungsabschnitt verbunden ist.

Durch Verkürzung oder Verlängerung der Spannbänder, die als ein erstes Spannband und als ein zweites Spannband ausgebildet sind, und wobei das erste Spannband dem ersten Stützelementanpressabschnitt zugeordnet ist, und das zweite Spannband dem zweiten Stützelementanpressabschnitt zugeordnet ist, können die ersten Stützelementanpressabschnitte entlang des Umfangs des ersten Kreises entlang der Außenseite der Dichtmanschette näher zueinander oder weiter entfernt zueinander positioniert werden und so den ersten Endabschnitt der Dichtmanschette komprimieren oder entspannen, und können die zweiten Stützelementanpressabschnitte entlang des Umfangs des zweiten Kreises entlang der Außenseite der Dichtmanschette näher zueinander oder weiter entfernt zueinander positioniert werden und so den zweiten Endabschnitt der Dichtmanschette komprimieren oder entspannen.

Eine Verbindungsvorrichtung gemäß vorstehender Beschreibung überwindet die Nachteile des Standes der Technik, weist einen einfachen Aufbau auf, ist leicht, schnell, reproduzierbar und kostengünstig herzustellen und besitzt eine sichere Fluiddichtheit.

Durch das Vorsehen, dass die Mehrzahl von Stützelementen ohne miteinander verbunden zu sein entlang der Außenseite der Dichtmanschette angeordnet sind, kann eine solche Verbindungsvorrichtung zum Einen in einfacher Weise zusammengebaut werden, zum Anderen können sich die einzelnen Stützelemente unabhängig voneinander beim Spannen des Spannbandes bewegen, wodurch kein Verklemmen oder eine andere Bewegungshinderung auftritt.

Es kann sich im Rahmen der vorliegenden Erfindung als besonders vorteilhaft erweisen, wenn das Stützelement wenigstens einen Fixiervorsprung oder wenigstens eine Fixieraufnahme aufweist.

Durch die Ausbildung wenigstens eines Fixiervorsprung oder wenigstens einer Fixieraufnahme an dem Stützelement kann in einfacher Weise eine Verbindung zu der Dichtmanschette hergestellt werden, wenn diese zu dem wenigstens einen Fixiervorsprung oder zu der wenigstens einen Fixieraufnahme des Stützelements kongruente Aufnahmen oder Vorsprünge aufweist.

Das Stützelement ist auf diese Weise gegen eine unerwünschte Verlagerung gegenüber der Dichtmanschette gesichert.

In einer sehr bevorzugten Fortbildung der vorliegenden Erfindung kann das Stützelement derartig ausgebildet sein, dass es wenigstens einen Haltevorsprung aufweist.

Durch die Ausbildung eines Haltevorsprungs am Stützelement, der an den Rändern des Stützelements in Richtung der Achse A der Verbindungsvorrichtung angeordnet ist, kann der Rand der Dichtmanschette übergriffen und so die Dichtmanschette vor einer unerwünschten Verlagerung gegenüber dem Stützelement bewahrt werden. Ein solcher Haltevorsprung kann eine Höhe von 3 bis 12 mm (Millimeter) aufweisen

Mit Vorteil kann in einer besonders bevorzugten Weiterentwicklung der vorliegenden Erfindung vorgesehen sein, dass die Stützelemente untereinander gleich sind. Auf diese Weise kann aus einem Werkzeug die benötigte Anzahl an Stützelementen zum Bau der Verbindungsvorrichtungen in einfacher, schneller, reproduzierbarer und kostengünstiger Weise erfolgen.

Es ist so auch einfach, mit Hilfe eines weiteren Werkzeugs anders bemaßte Stützelemente mit den gleichen Vorteilen herzustellen, die für Verbindungsvorrichtungen benötigt werden, die für andere Rohrabmessungen einsetzbar sind.

Bei der vorliegenden Erfindung kann es sich als sehr vorteilhaft erweisen, wenn vorgesehen ist, dass die Mehrzahl von Stützelementen für eine Verbindungsvorrichtung vier, fünf, sechs, sieben, acht, neun, zehn, elf, zwölf, dreizehn, vierzehn oder fünfzehn beträgt.

Durch das Vorsehen, dass die Mehrzahl von Stützelementen für eine Verbindungsvorrichtung vier, fünf, sechs, sieben, acht, neun, zehn, elf, zwölf, dreizehn, vierzehn oder fünfzehn beträgt, kann eine Verbindungsvorrichtung gebaut werden, die exakt auf die Abmessungen der zu verbindenden Rohre abgestimmt ist.

Hierbei ist auf die Größe der eingesetzten Dichtmanschette zu achten, durch die die Mehrzahl an Stützelementen vorgegeben ist.

Mit großem Vorteil kann die vorliegende Erfindung in einer Weiterentwicklung derart ausgestaltet sein, dass die Dichtmanschette an ihrer Innenseite wenigstens eine Dichtlippe aufweist, die von der Innenoberfläche nach innen hervorsteht und entlang einer Kurve angeordnet ist, die zwischen einer ersten Ebene E1 und einer zweiten Ebene E2 stetig ausgebildet ist.

Durch das Vorsehen, dass die Dichtmanschette an ihrer Innenseite wenigstens eine Dichtlippe aufweist, die von der Innenoberfläche nach innen hervorsteht und entlang einer Kurve angeordnet ist, die zwischen einer ersten Ebene E1 und einer zweiten Ebene E2 stetig ausgebildet ist, kann zum Einen das zu verbindende Rohr leicht in die Dichtmanschette eingeschoben werden, da es zunächst nur mit Abschnitten der Dichtlippe in Kontakt kommt, zum Anderen ist dadurch eine definierte Komprimierung der Dichtung möglich, die eine sichere Dichtheit nach sich zieht.

Die Anordnung der Dichtlippe entlang einer Kurve, die zwischen einer ersten Ebene E1 und einer zweiten Ebene E2 stetig ausgebildet ist, kann beispielsweise einer sinusförmig gestalteten Kurve folgen.

In einer anderen Ausführung der Erfindung kann vorgesehen sein, dass sich die Dichtlippe entlang der Innenseite der Dichtmanschette geradlinig herumzieht.

Die Dichtlippe ist hierzu geradlinig in einer Ebene angeordnet.

Je nach Notwendigkeit können auch beide Ausbildungen der Dichtlippe in einer Dichtmanschette ausgebildet sein.

Während die erstgenannte Lösung mit der Dichtlippe, die entlang einer Kurve ausgebildet ist, für an der Außenseite glattwandig ausgebildete Rohre geeignet ist, ist die zweite Lösung mit einer geradlinig ausgebildeten Dichtlippe insbesondere für Wellrohre, also für korrugierte Rohre, die Wahl, da auf diese Weise den Außenkonturen der Rohre Rechnung getragen werden kann und so eine sichere Dichtheit erreicht wird.

In vorteilhafter Weise kann bei der vorliegenden Erfindung vorgesehen sein, dass die Dichtmanschette an ihrer Innenseite wenigsten eine Nut aufweist, in der ein quellfähiges Dichtungselement aufgenommen ist.

Bei Zutritt von Wasser oder Feuchtigkeit quillt ein solches quellfähiges Dichtungselement auf und dichtet durch seine Expansion und durch das dadurch bedingte Anlagen an die Rohroberfläche und an die Nut der Dichtmanschette ab und sichert so die Fluiddichtheit der Verbindungsvorrichtung.

In vorteilhafter Weise kann bei der vorliegenden Erfindung vorgesehen sein, das das Stützelement wenigstens einen Führungsvorsprung aufweist, der sich von dem Stützelement 2 bis 3 mm (Millimeter) erhebt und zur Führung des Spannbandes geeignet ist. In einer Weiterentwicklung kann der Führungsvorsprung auch so gestaltet sein, dass er das Spannband übergreift.

Auf diese Weise kann das Spannband sicher auf dem Stützelement geführt werden und kann nicht von diesem abgleiten, wenn es gespannt wird.

Als Spannband eignet sich ein solches aus Edelstahl, das handelsüblich und somit leicht beschafft werden kann.

Die Stützelemente lassen sich leicht in einem Kunststoffformgebungsverfahren, wie beispielsweise einem Spritzgussverfahren herstellen.

Hierzu ist das Stützelement aus einem Polymermaterial gebildet oder enthält ein solches. Das Polymermaterial ist bevorzugt ein Thermoplast, und besonders bevorzugt ein Polyolefin, wie beispielsweise ein Polypropylen oder ein Polyethylen oder ein Polybutylen, oder ein Copolymeres der Vorgenannten, oder ein vernetztes Polyolefin, insbesondere ein vernetztes Polyethylen, oder ein Polyvinylchlorid, oder ein Polyurethan, oder ein Polyvinylchlorid oder ein Polycarbonat oder ein Polyamid oder ein Polystyrol der ein anderes geeignetes Material.

Es ist alternativ auch möglich, das Stützelement in einem 3D-Druckverfahren herzustellen.

Die Dichtmanschette kann aus einem Elastomermaterial bestehen oder ein solches enthalten, wobei das Elastomermaterial bevorzugt ein Gummi oder ein Thermoplastisches Elastomer oder ein Kautschuk oder ein Nitrilkautschuk oder ein Butylkautschuk oder ein EPDM (Ethylen-Propylen-Dien-Kautschuk) oder ein SBR (Styrol-Butadien-Kautschuk) oder ein NBR (Nitril-Butadien-Rubber) ist.

Die zweite Aufgabe der vorliegenden Erfindung, eine Anordnung mit einer Verbindungsvorrichtung anzugeben, erfährt ihre Lösung durch den Gegenstand des Anspruchs 8.

Es wurde erkannt, dass eine Anordnung, umfassend eine Verbindungsvorrichtung nach der vorstehenden Beschreibung und ein erstes und ein zweites Rohr, die mit Hilfe der Verbindungsvorrichtung miteinander verbunden sind, wobei zum Bilden der Verbindung ein erster von zwei Endabschnitten der Dichtmanschette einen Rohrendabschnitt des ersten Rohrs aufnimmt und der zweite Endabschnitt einen Rohrendabschnitt des zweiten Rohrs aufnimmt, die über die Dichtmanschette miteinander verbunden sind, die Aufgabe vollständig löst.

Mit der erfindungsgemäßen Verbindungsvorrichtung ist die Bereitstellung einer Verbindung zwischen Rohren mit sehr unterschiedlichen Außendurchmessern bzw. mit unterschiedlichen Außenkonturen möglich.

Unter "Rohren" ist im Erfindungszusammenhang stets zu verstehen, dass neben den Rohren auch Rohrbögen, Rohrabzweige, Rohrreduzierstücke und dergleichen gemeint sind und unter die Erfindung fallen.

Dies ist dadurch erreicht, dass durch das Vorsehen der vergrößerbaren bzw. verkleinerbaren lichten Weite der beiden Endabschnitte der Dichtmanschette vorteilhaft eine Anpassung der erfindungsgemäßen Verbindungsvorrichtung in Kombination mit dem erfindungsgemäßen Vorsehen, dass die Stützelemente einzeln, ohne dass sie untereinander verbunden sind, an der Außenseite der Dichtmanschette angeordnet sind, an die bestehenden Abweichungen zwischen den Außendurchmessern der zu verbindenden Rohre erfolgen kann bzw. vorgenommen werden kann. Insbesondere die Lösung, einzeln angeordnete Stützelemente vorzusehen, die untereinander nicht verbunden sind, an der Außenseite der Dichtmanschette, zeitigt eine hohe Flexibilität des Systems, die sowohl der Größe der zu überbrückenden Außendurchmesserabweichungen der zu verbindenden Rohre entgegenkommt, wie auch eine sichere Fluiddichtheit ermöglicht.

Beim Spannen der Spannbänder zur Herstellung der fluiddichten Verbunds aus der Verbindungsvorrichtung und den zwei zu verbindenden Rohren werden die Stützelemente an die Dichtmanschette gepresst, die dadurch wiederum an die Außenseiten der zu verbindenden Rohre gedrückt wird.

Hierbei kommt es zu Relativbewegungen der Stützelemente untereinander, die entlang der Außenseite der Dichtmanschette näher zusammenrücken und über die Außenseite der Dichtmanschette hinweggleiten. Dies kann unterstützt werden durch eine glatte Ausbildung der Außenseite der Dichtmanschette, durch eine glatte Seite der auf der Dichtmanschette gleitenden Stützelemente, aber auch durch Zugabe eines Gleitmittels zwischen die Stützelemente und die Dichtmanschette.

Die Stützelemente sind selbst in hohem Grad flexibel ausgebildet durch den Mittelbereich, der mehrfach durchbrochen ist und durch die randseitigen Verbindungsbögen, die zusammen eine federnde hohe Beweglichkeit des Stützelements beim Spannen ermöglichen.

Verwendung findet die erfindungsgemäße Verbindungsvorrichtung überall dort, wo Rohre unterschiedlichen Durchmessers bzw. unterschiedlicher Außenkonturen fluiddicht zu verbinden sind, also in der Versorgung mit Wasser und anderen Medien, in der Entsorgung dieser Medien, insbesondere im Bereich der Abwassertechnik, allgemein überall dort, wo in Rohren Fluide aufgenommen, gespeichert und geleitet werden. Dies betrifft die städtische Ver- und Entsorgung, die Industrieinfrastruktur, die Landwirtschaft, den Obst- und Gartenbau, die Lebensmittel-, Getränke-, Medizin- und Pharmatechnik, sowie den Fahrzeug-, Flugzeug- und Schiffsbau.

Weitere wichtige Merkmale und Vorteile der Erfindung ergeben sich aus den Unteransprüchen, aus den Figuren und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Figuren dargestellt und werden in der nachfolgenden Beschreibung näher erläutert, wobei sich gleiche Bezugszeichen auf gleiche oder funktional gleiche oder ähnliche Bauteile beziehen.

### Kurzbeschreibung der Zeichnungen

Nachfolgend werden Ausführungsbeispiele der Erfindung anhand der beigefügten Zeichnungen näher erläutert.

Es zeigt:
- Fig. 1: eine dreidimensionale erste Darstellung eines Ausführungsbeispiels einer erfindungsgemäßen Verbindungsvorrichtung;
- Fig. 2: eine dreidimensionale Darstellung eines Abschnitts der Innenseite der Dichtmanschette mit der Dichtlippe;
- Fig. 3: eine dreidimensionale zweite Darstellung eines Ausführungsbeispiels einer erfindungsgemäßen Verbindungsvorrichtung;
- Fig. 4: eine dreidimensionale Darstellung eines Stützelements.

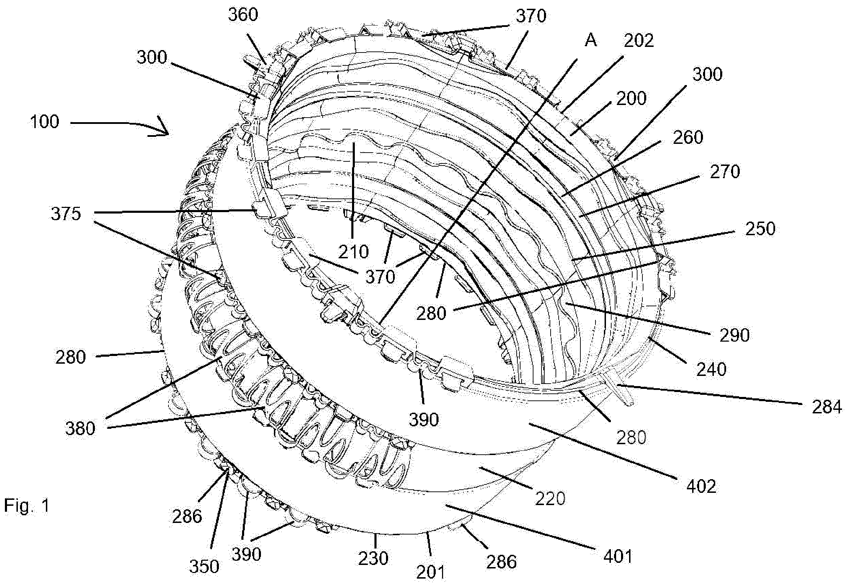

In der Fig. 1 ist in einer dreidimensionalen ersten Darstellung ein Ausführungsbeispiel einer erfindungsgemäßen Verbindungsvorrichtung 100 gezeigt.

Die Verbindungsvorrichtung 100 ist der Übersichtlichkeit nicht vollständig ausgebildet, kann aber ohne Weiteres gedanklich ergänzt werden.

So sind an der Verbindungsvorrichtung 100 nur vier von fünf Stützelementen 300 dargestellt.

Die erfindungsgemäße Verbindungvorrichtung 100 umfasst eine Dichtmanschette 200, die hohlzylinderförmig ausgebildet ist und eine Innenseite 210 und eine Außenseite 220 aufweist. Von der Innenseite 210 der Dichtmanschette 200 stehen Dichtlippen 250 hervor, die zu den Oberflächen der in die Dichtmanschette 200 eingeschobenen hier nicht gezeigten zu verbindenden Rohre abdichten.

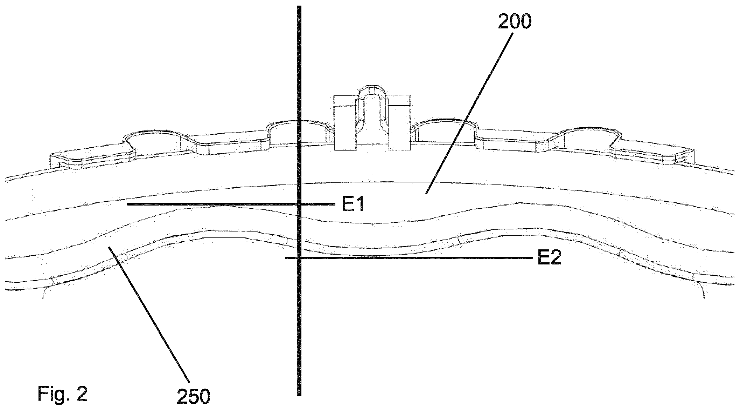

Zu den Details der Anordnung der Dichtlippen 250 wird auf die Figurenbeschreibung der Fig. 2 verwiesen.

Die Rohre können hierzu bis zu einem Anschlag 290 in die Dichtmanschette 200 eingeschoben werden.

An der Innenseite 210 der Dichtmanschette 200 ist eine Nut 260 ausgebildet, in der ein quellfähiges Dichtungselement 270 angeordnet ist.

Die Dichtmanschette 200 ist bezüglich des Anschlags 290 spiegelsymmetrisch ausgebildet, sodass die jeweiligen Dichtlippen 250 die Nut 260, in der ein quellfähiges Dichtungselement 270 angeordnet ist, jeweils paarig vorhanden sind.

Die Dichtmanschette 200 weist einen ersten Endabschnitt 201 und einen zweiten Endabschnitt 202 auf.

Am Rand 280 der Dichtmanschette 200 sind entweder Dichtmanschettenfixiervorsprünge 284 ausgebildet, was in der Fig. 1 am auf den Betrachter zuweisenden Rand 280 der Dichtmanschette 200 gezeigt ist, oder es sind Dichtmanschettenfixieraufnahmen 286 ausgebildet, was entsprechend am vom Betrachter wegweisenden Rand 280 der Dichtmanschette 200 gezeigt ist.

Es versteht sich, dass eine Dichtmanschette 200 entweder im Ganzen gemäß der Ausführung nach vorstehender Beschreibung nur mit Dichtmanschettenfixiervorsprünge 284 ausgebildet ist, oder alternativ nur mit Dichtmanschettenfixieraufnahmen 286.

Es ist aber auch möglich, die Dichtmanschette 200 gemäß der Fig. 1 auszubilden. Entlang der Außenseite 220 der Dichtmanschette 200 sind eine Mehrzahl - in der Fig. 1 sind vier abgebildet - von Stützelementen 300 angeordnet.

Das in der Fig. 1 fehlende Stützelement 300 ist gedanklich leicht zu ergänzen und dem Umstand geschuldet, dass an dieser Stelle die Ausbildung der Dichtmanschette 200 detaillierter zeigbar ist.

Die Stützelemente 300 sind einzeln, ohne dass sie untereinander verbunden wären, an der Außenseite 210 der Dichtmanschette 200 angeordnet.

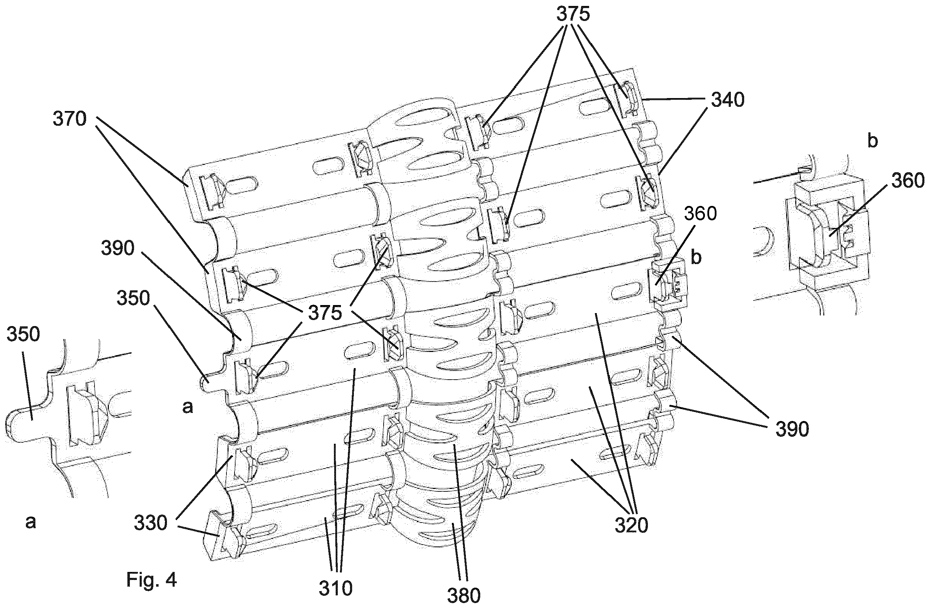

Zu den Details der Stützelemente 300 wird auf die Figurenbeschreibung der Fig. 4 verwiesen.

Zur Herstellung der Dichtheit zwischen der Verbindungsvorrichtung 100 und den hier nicht gezeigten eingeschobenen Rohren sind auf den Stützelementen 300 zwei Spannbänder 401, 402 angeordnet. Die Spannbänder 401, 402 können in ihrer Länge verkürzt werden, wozu hier nicht gezeigte, dem Fachmann jedoch bekannte Schlösser bzw. andere Einrichtungen vorgesehen sind.

Beim Verkürzen der Länge der Spannbänder 401, 402 werden die Stützelemente 300 an die Dichtmanschette 200 und diese gegen die Außenoberfläche der eingeschobenen Rohre gedrückt, wobei die Dichtheit hergestellt wird.

Die ersten Stützelementanpressabschnitte 310 der Stützelemente 300, die in der Fig. 4 gezeigt und beschrieben sind, hier in der Fig. 1 jedoch unter dem Spannband 401 liegen, sind entlang eines Umfangs eines ersten Kreises 230 entlang der Außenseite 220 der Dichtmanschette 200 aufeinanderfolgend angeordnet.

Die zweiten Stützelementanpressabschnitte 320 der Stützelemente 300, die in der Fig. 4 gezeigt und beschrieben sind, hier in der Fig. 1 jedoch unter dem Spannband 402 liegen, sind entlang eines Umfangs eines zweiten Kreises 240 entlang der Außenseite 220 der Dichtmanschette 200 aufeinanderfolgend angeordnet.

Durch die Verbindungsvorrichtung 100 verläuft eine Achse A, die mit den Achsen der einzusteckenden und zu verbindenden Rohre fluchten können, die Flexibilität der Verbindungsvorrichtung 100 ist jedoch so groß, dass eine max. Winkelauslenkung von 7 ° möglich ist, ohne dass die Dichtheit dabei leidet.

In der Fig. 2 ist eine dreidimensionale Darstellung eines Abschnitts der Innenseite 210 der Dichtmanschette 200 mit der Dichtlippe 250 gezeigt.

An der Innenseite 210 der Dichtmanschette 200 ist eine Dichtlippe 250 derartig angeordnet, dass diese von der Innenseite 210 nach innen hervorsteht.

Die Dichtlippe 250 ist entlang einer Kurve angeordnet, die zwischen einer ersten Ebene E1 und einer zweiten Ebene E2 stetig ausgebildet ist.

In der vorliegenden Ausführung der Dichtmanschette 200 ist die Kurve, entlang der die Dichtlippe 250 angeordnet ist, etwa von sinusförmiger Gestalt.

In einer bevorzugten Ausführung der Erfindung stehen die beiden Ebenen E1 und E2 parallel zueinander und sind beide senkrecht zur Achse A der Verbindungsvorrichtung 100 orientiert.

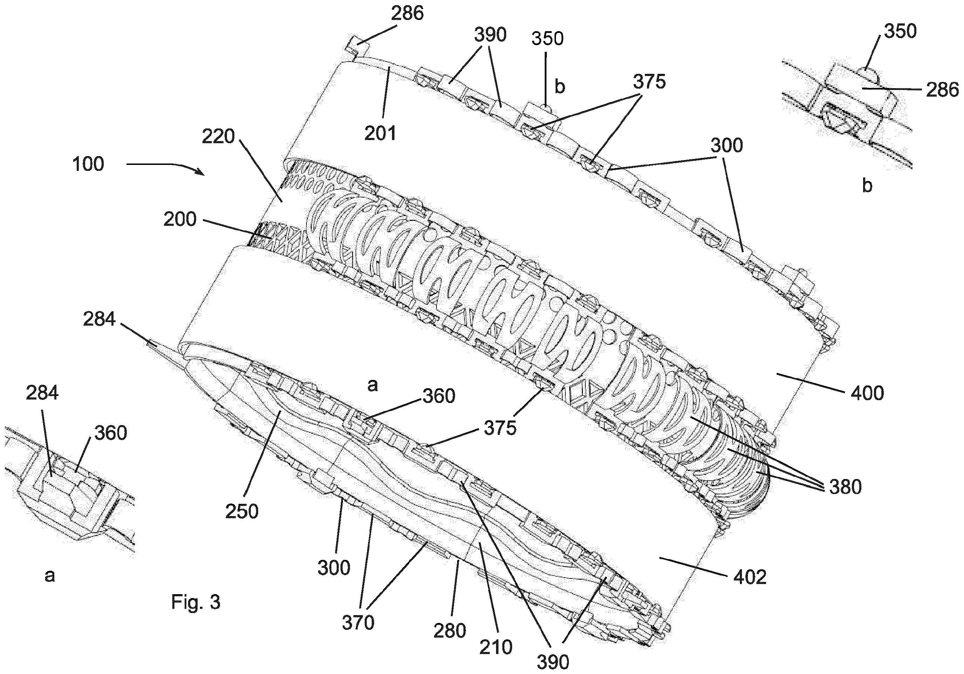

In der Fig. 3 ist in einer dreidimensionalen zweiten Darstellung ein Ausführungsbeispiel einer erfindungsgemäßen Verbindungsvorrichtung 100 gezeigt.

Die Verbindungsvorrichtung 100 ist der Übersichtlichkeit nicht vollständig ausgebildet, kann aber ohne Weiteres gedanklich ergänzt werden.

So sind an der Verbindungsvorrichtung 100 nur vier von fünf Stützelementen 300 dargestellt.

In der Fig. 3 ist im Detail die Verbindung zwischen der Dichtmanschette 200 und den Stützelementen 300 gezeigt.

In einer Ausführung der Dichtmanschette 200 weist diese am Rand 280 eine Anzahl an Dichtmanschettenfixiervorsprüngen 284 auf, die der Anzahl an damit zu verbindenden Stützelementen 300 entspricht.

Die Dichtmanschettenfixiervorsprünge 284 stehen vom Rand 280 der Dichtmanschette 200 nach außen hervor.

Die Dichtmanschettenfixiervorsprünge 284 können in entsprechend kongruent gestaltete Fixieraufnahmen 360 am Rand der Stützelemente 300 eingeschoben werden und verbinden so die Dichtmanschette 200 mit den Stützelementen 300, was im Detail a der Fig. 3 gezeigt ist.

In einer alternativen Ausführung der Dichtmanschette 200 kann diese am Rand 280 Dichtmanschettenfixieraufnahmen 286 aufweisen, wobei deren Anzahl wiederum der Anzahl an damit zu verbindenden Stützelementen 300 entspricht.

In die Dichtmanschettenfixieraufnahmen 286 können entsprechend kongruent gestaltete Fixiervorsprünge 350, die am Rand der Stützelemente 300 ausgebildet sind, eingeschoben werden und verbinden so die Dichtmanschette 200 mit den Stützelementen 300, was im Detail b der Fig. 3 gezeigt ist.

Die Verteilung der Dichtmanschettenfixiervorsprünge 284 bzw. der Dichtmanschettenfixieraufnahmen 286 am Rand 280 der Dichtmanschette 200 ist so, dass diese jeweils zu ihren unmittelbaren Nachbarn gleich beabstandet sind.

An den Stützelementen 300 sind randseitig Haltevorsprünge 370 angeordnet, welche den Rand 280 der Dichtmanschette 200 umfassen und so ein unerwünschtes Verlagern der Dichtmanschette 200 gegenüber den Stützelementen 300 verhindern. An den Stützelementen 300 sind Führungsvorsprünge 375 angeordnet, welche die Spannbänder 401, 402 führen. Die Führungsvorsprünge 375 können so ausgebildet sein, dass diese die Spannbänder 401, 402 ein Stück weit übergreifen, was zwischen 2 und 3 mm (Millimeter) betragen kann. Auf diese Weise sind die Spannbänder 401, 402 gegen ein unerwünschtes Herabgleiten von den Stützelementen 300 gesichert.

Die Flexibilität der Verbindungsvorrichtung 100 der vorliegenden Erfindung wird im Wesentlichen dadurch bereitgestellt, dass die Verbindungsabschnitte 380 der Stützelemente 300 zusammen mit den Verbindungsbögen 390 eine hohe Beweglichkeit der Anordnung zulassen, so dass Rohre mit unterschiedlichen Abmessungen in einfacher Weise durch die Verbindungsvorrichtung 100 fluiddicht verbunden werden können.

In der Fig. 4 ist in einer dreidimensionalen Abbildung eine Stützelement 300 gezeigt. Das Stützelement 300 weist eine etwa rechteckige gebogene Form auf und umfasst fünf Abschnitte, die durch Verbindungsbögen 390 miteinander verbunden sind.

In der Fig. 4 ist auf der linken Seite dargestellt, dass die Verbindungsbögen 390 einbögig gestaltet sind, während diese auf der rechten Seite der Fig. 4 jeweils doppelbögig ausgebildet sind.

Es versteht sich, dass ein Stützelement 300 entweder im Ganzen gemäß der Ausführung auf der linken Seite der Fig. 4 oder der rechten Seite der Fig. 4 ausgebildet ist, oder so wie in der Fig. 4 dargestellt.

Das Stützelement 300 umfasst einen ersten Stützelementanpressabschnitt 310 und einen zweiten Stützelementanpressabschnitt 320, die durch einen Verbindungsabschnitt 380 miteinander verbunden sind. Der Verbindungsabschnitt 380 ist mehrfach durchbrochen, sodass dort eine hohe Flexibilität ausgebildet ist, die es gestattet, dass der erste Stützelementanpressabschnitt 310 relativ zum zweiten Stützelementanpressabschnitt 320 bewegbar ausgebildet ist.

In der Fig. 4 ist weiterhin gezeigt, dass an einem Stützelement 300 ein Fixiervorsprung 350 ausgebildet ist, der von dem Stützelement 300 seitlich absteht. Alternativ kann an dem Stützelement 300 eine Fixieraufnahme 360 ausgebildet sein, was in der Fig. 4 auf der rechten Seite gezeigt ist.

Hierzu ist der Fixiervorsprung 350 als Detail a auf der linken Seite der Fig. 4 gezeigt, die Fixieraufnahme 360 entsprechend auf der rechten Seite der Fig. 4 als Detail b.

Der Fixiervorsprung 350 dient dazu, in eine entsprechend kongruente Dichtmanschettenfixieraufnahme an der hier nicht gezeigten Dichtmanschette 200 eingeführt zu werden, die Fixieraufnahme 360 zur Verbindung mit einem Dichtmanschettenfixiervorsprung an der hier nicht gezeigten Dichtmanschette 200. Auf diese Weise kann einer unerwünschten Verlagerung des Stützelements 300 relativ zur Dichtmanschette 200 begegnet werden.

Auf dem ersten Stützelementanpressabschnitt 310 und auf dem zweiten Stützelementanpressabschnitt 320 können die hier nicht gezeigten Spannbänder 401, 402 angeordnet werden. Um diese zu führen, sind Führungsvorsprünge 375 vorgesehen, die sich vom Stützelement 300 erheben. Die Führungsvorsprünge 375 sind derartig ausgestaltet, dass sie das jeweilige Spannband 401, 402 ein kurzes Stück weit umgreifen, umso ein unerwünschtes Herabgleiten des Spannbandes 401, 401 beim Spannen vom Stützelement 300 zu vermeiden.

An den Rändern des Stützelements 300 sind Haltevorsprünge 370 vorgesehen, welche etwa um 90° abgekröpft nach innen in Richtung der hier nicht gezeigten Dichtmanschette 200 ausgebildet sind. Die alte Vorsprünge 370 halten die hier nicht gezeigte Dichtmanschette 200 in Position, wobei eine unerwünschte Verlagerung der Dichtmanschette 200 gegenüber dem Stützelement 300 vermieden wird.

Am Stützelement 300 ist ein erster Stützelementendabschnitt 330 und ein zweiter Stützelementendabschnitt 340 ausgebildet.

### Bezugszeichenliste

- 100: Verbindungsvorrichtung
- 200: Dichtmanschette
- 201: erster Endabschnitt
- 202: zweiter Endabschnitt
- 210: Innenseite
- 220: Außenseite
- 230: erster Kreis
- 240: zweiter Kreis
- 250: Dichtlippe
- 260: Nut
- 270: quellfähiges Dichtungselement
- 280: Rand
- 284: Dichtmanschettenfixiervorsprung
- 286: Dichtmanschettenfixieraufnahme
- 290: Anschlag
- 300: Stützelement
- 310: erster Stützelementanpressabschnitt
- 320: zweiter Stützelementanpressabschnitt
- 330: erster Stützelementendabschnitt
- 340: zweiter Stützelementendabschnitt
- 350: Fixiervorsprung
- 360: Fixieraufnahme
- 370: Haltevorsprung
- 375: Führungsvorsprung
- 380: Verbindungsabschnitt
- 390: Verbindungsbogen
- 401: erstes Spannband
- 402: zweites Spannband
- A: Achse
- E1: erste Ebene
- E2: zweite Ebene

## Patentansprüche

1. Verbindungsvorrichtung (100) zum Verbinden eines ersten und eines zweiten Rohrs, umfassend eine Dichtmanschette (200), eine Mehrzahl von Stützelementen (300) und wenigstens zwei Spannbänder (401, 402), wobei zum Bilden der Verbindung ein erster von zwei Endabschnitten (201, 202) der Dichtmanschette (200) einen Rohrendabschnitt des ersten Rohrs aufnimmt und der zweite Endabschnitt (202) einen Rohrendabschnitt des zweiten Rohrs aufnimmt, die über die Dichtmanschette (200) miteinander verbunden sind, wobei die Dichtmanschette (200) eine Innenseite (210) und eine Außenseite (220) aufweist, und wobei die Mehrzahl von Stützelementen (300) entlang der Außenseite (220) der Dichtmanschette (200) angeordnet sind, und wobei jedes Stützelement (300) wenigstens teilweise aus einem verformbaren Material besteht oder ein solches enthält, und wobei jedes Stützelement (300) einen ersten Stützelementanpressabschnitt (310) und einen zweiten Stützelementanpressabschnitt (320) aufweist, und wobei die ersten Stützelementanpressabschnitte (310) entlang eines Umfangs eines ersten Kreises (230) entlang der Außenseite (220) der Dichtmanschette (200) aufeinanderfolgend angeordnet sind und einen ersten Stützelementendabschnitt (330) mit einer ersten Öffnung (340) zur Aufnahme des ersten Endabschnitts (201) der Dichtmanschette (200) bilden, und wobei die zweiten Stützelementanpressabschnitte (320) entlang eines Umfangs eines zweiten Kreises (240) entlang der Außenseite (220) der Dichtmanschette (200) aufeinanderfolgend angeordnet sind und einen zweiten Stützelementendabschnitt (340) mit einer zweiten Öffnung zur Aufnahme des zweiten Endabschnitts (202) der Dichtmanschette (200) bilden, und wobei wenigstens ein erster Stützelementanpressabschnitt (310) mit einem zweiten Stützelementanpressabschnitt (320) durch wenigstens einen verformbaren Verbindungsabschnitt (200) verbunden ist, wobei durch Verkürzung oder Verlängerung der Spannbänder (401, 402), die als ein erstes Spannband (401) und als ein zweites Spannband (402) ausgebildet sind, und wobei das erste Spannband (401) dem ersten Stützelementanpressabschnitt (310) zugeordnet ist, und das zweite Spannband (402) dem zweiten Stützelementanpressabschnitt (320) zugeordnet ist, die ersten Stützelementanpressabschnitte (310) entlang des Umfangs des ersten Kreises (230) entlang der Außenseite (220) der Dichtmanschette (200) näher zueinander oder weiter entfernt zueinander positioniert werden und so den ersten Endabschnitt (201) der Dichtmanschette (200) komprimieren oder entspannen, und die zweiten Stützelementanpressabschnitte (320) entlang des Umfangs des zweiten Kreises (240) entlang der Außenseite (220) der Dichtmanschette (200) näher zueinander oder weiter entfernt zueinander positioniert werden und so den zweiten Endabschnitt (202) der Dichtmanschette (200) komprimieren oder entspannen, **dadurch gekennzeichnet, dass** die Mehrzahl der Stützelemente (300) nicht miteinander verbunden sind.

2. Verbindungsvorrichtung (100) nach Anspruch 1, **dadurch gekennzeichnet, dass** das Stützelement (300) wenigstens einen Fixiervorsprung (350) oder wenigstens eine Fixieraufnahme (360) aufweist.

3. Verbindungsvorrichtung (100) nach einem der Ansprüche 1 oder 2, **dadurch gekennzeichnet, dass** das Stützelement (300) wenigstens einen Haltevorsprung (370) aufweist.

4. Verbindungsvorrichtung (100) nach einem der vorangehenden Ansprüche, **dadurch gekennzeichnet, dass** die Stützelemente (300) untereinander gleich sind.

5. Verbindungsvorrichtung (100) nach einem der vorangehenden Ansprüche, **dadurch gekennzeichnet, dass** die Mehrzahl von Stützelementen (300) vier, fünf, sechs, sieben, acht, neun, zehn, elf, zwölf, dreizehn, vierzehn oder fünfzehn beträgt.

6. Verbindungsvorrichtung (100) nach einem der vorangehenden Ansprüche, **dadurch gekennzeichnet, dass** die Dichtmanschette (200) an ihrer Innenseite (210) wenigstens eine Dichtlippe (250) aufweist, die von der Innenoberfläche (210) nach innen hervorsteht und entlang einer Kurve angeordnet ist, die zwischen einer ersten Ebene E1 und einer zweiten Ebene E2 stetig ausgebildet ist, und / oder dass die Dichtmanschette (200) an ihrer Innenseite (210) wenigstens eine Dichtlippe (250) aufweist, die von der Innenoberfläche (210) nach innen hervorsteht und geradlinig in einer Ebene angeordnet ist.

7. Verbindungsvorrichtung (100) nach einem der vorangehenden Ansprüche, **dadurch gekennzeichnet, dass** die Dichtmanschette (200) an ihrer Innenseite (210) wenigsten eine Nut (260) aufweist, in der ein quellfähiges Dichtungselement 270) aufgenommen ist.

8. Anordnung umfassend eine Verbindungsvorrichtung (100) nach einem der Ansprüche 1 bis 7 und ein erstes und ein zweites Rohr, die mit Hilfe der Verbindungsvorrichtung (100) miteinander verbunden sind, wobei zum Bilden der Verbindung ein erster von zwei Endabschnitten (201, 202) der Dichtmanschette (200) einen Rohrendabschnitt des ersten Rohrs aufnimmt und der zweite Endabschnitt (202) einen Rohrendabschnitt des zweiten Rohrs aufnimmt, die über die Dichtmanschette (200) miteinander verbunden sind.

## Claims

1. Connecting device (100) for connecting a first and a second tube, comprising a sealing sleeve (200), a plurality of support elements (300) and at least two clamping strips (401, 402), wherein, to form the connection, a first of two end portions (201, 202) of the sealing sleeve (200) receives a tube end portion of the first tube and the second end portion (202) receives a tube end portion of the second tube, which are connected to each other via the sealing sleeve (200), wherein the sealing sleeve (200) comprises an inner face (210) and an outer face (220), and wherein the plurality of support elements (300) are arranged along the outer face (220) of the sealing sleeve (200), and wherein each support element (300) is at least partly made of a deformable material or contains such a material, and wherein each support element (300) comprises a first support element pressure portion (310) and a second support element pressure portion (320), and wherein the first support element pressure portions (310) are arranged in succession along a circumference of a first circle (230) along the outer face (220) of the sealing sleeve (200) and form a first support element end portion (330) provided with a first opening (340) for receiving the first end portion (201) of the sealing sleeve (200), and wherein the second support element pressure portions (320) are arranged in succession along a circumference of a second circle (240) along the outer face (220) of the sealing sleeve (200) and form a second support element end portion (340) provided with a second opening for receiving the second end portion (202) of the sealing sleeve (200), and wherein at least one first support element pressure portion (310) is connected to a second support element pressure portion (320) by at least one deformable connecting portion, wherein, by shortening or lengthening the clamping bands (401, 402), which are formed as a first clamping band (401) and a second clamping band (402), and the first clamping band (401) being associated with the first support element pressure portion (310) and the second clamping band (402) being associated with the second support element pressure portion (320), the first support element pressure portions (310) are positioned closer or further away along the circumference of the first circle (230) along the outer face (220) of the sealing sleeve (200) and thereby compress or release the first end portion (201) of the sealing sleeve (200), and the second support element pressure portions (320) are positioned closer to or further away from each other along the circumference of the second circle (240) along the outer face (220) of the sealing sleeve (200) and thereby compress or release the second end portion (202) of the sealing sleeve (200), **characterized in that** the plurality of support elements (300) are not connected to each other.

2. Connecting device (100) according to claim 1, **characterized in that** the support element (300) comprises at least one fastening projection (350) or at least one fastening recess (360).

3. Connecting device (100) according to claim 1 or 2, **characterized in that** the support element (300) comprises at least one retaining projection (370).

4. Connecting device (100) according to any one of the preceding claims, **characterized in that** the support elements (300) are identical to one another.

5. Connecting device (100) according to any one of the preceding claims, **characterized in that** the plurality of support elements (300) is four, five, six, seven, eight, nine, ten, eleven, twelve, thirteen, fourteen or fifteen in number.

6. Connecting device (100) according to any one of the preceding claims, **characterized in that** the sealing sleeve (200) comprises, on its inner face (210), at least one sealing lip (250) which projects inwards from the inner face (210) and is arranged along a curve which is made continuous between a first plane E1 and a second plane E2, and/or **in that** the sealing sleeve (200) comprises, on its inner face (210), at least one sealing lip (250) which projects inwards from the inner face (210) and is arranged rectilinearly in a plane.

7. Connecting device (100) according to any one of the preceding claims, **characterized in that** the sealing sleeve (200) comprises, on its inner face (210), at least one groove (260) in which a swellable sealing element (270) is received.

8. Arrangement, comprising a connecting device (100) according to any one of claims 1 to 7 and a first and a second tube, which are connected to each other by means of the connecting device (100), wherein, to form the connection, a first of two end portions (201, 202) of the sealing sleeve (200) receives a tube end portion of the first tube and the second end portion (202) receives a tube end portion of the second tube, which are connected to each other via the sealing sleeve (200).

## Revendications

1. Dispositif de raccordement (100) destiné à raccorder un premier et un second tube, comprenant un manchon d'étanchéité (200), une pluralité d'élément d'appui (300) et au moins deux bandes de serrage (401, 402), dans lequel, pour former le raccordement, une première de deux parties d'extrémité (201, 202) du manchon d'étanchéité (200) reçoit une partie d'extrémité de tube du premier tube et la seconde partie d'extrémité (202) reçoit une partie d'extrémité de tube du second tube, qui sont raccordés l'un à l'autre par le biais du manchon d'étanchéité (200), dans lequel le manchon d'étanchéité (200) présente une face intérieure (210) et une face extérieure (220), et dans lequel la pluralité d'éléments d'appui (300) sont agencés le long de la face extérieure (220) du manchon d'étanchéité (200), et dans lequel chaque élément d'appui (300) est au moins en partie constitué d'un matériau déformable ou contient un matériau de ce type, et dans lequel chaque élément d'appui (300) présente une première partie de pression d'élément d'appui (310) et une seconde partie de pression d'élément d'appui (320), et dans lequel les premières parties de pression d'élément d'appui (310) sont agencées à la suite les unes des autres le long d'une circonférence d'un premier cercle (230) le long de la face extérieure (220) du manchon d'étanchéité (200) et forment une première partie d'extrémité d'élément d'appui (330) dotée d'une première ouverture (340) destinée à recevoir la première partie d'extrémité (201) du manchon d'étanchéité (200), et dans lequel les secondes parties de pression d'élément d'appui (320) sont agencées à la suite les unes des autres le long d'une circonférence d'un second cercle (240) le long de la face extérieure (220) du manchon d'étanchéité (200) et forment une seconde partie d'extrémité d'élément d'appui (340) dotée d'une seconde ouverture destinée à recevoir la seconde partie d'extrémité (202) du manchon d'étanchéité (200), et dans lequel au moins une première partie de pression d'élément d'appui (310) est raccordée à une seconde partie de pression d'élément d'appui (320) par au moins une partie de raccordement déformable, dans lequel, par le raccourcissement ou l'allongement des bandes de serrage (401, 402), qui sont réalisées sous la forme d'une première bande de serrage (401) et d'une seconde bande de serrage (402), et la première bande de serrage (401) étant associée à la première partie de pression d'élément d'appui (310) et la seconde bande de serrage (402) étant associée à la seconde partie de pression d'élément d'appui (320), les premières parties de pression d'élément d'appui (310) sont positionnées plus près ou plus loin les unes des autres le long de la circonférence du premier cercle (230) le long de la face extérieure (220) du manchon d'étanchéité (200) et compriment ou relâchent ainsi la première partie d'extrémité (201) du manchon d'étanchéité (200), et les secondes parties de pression d'élément d'appui (320) sont positionnées plus près ou plus loin les unes des autres le long de la circonférence du second cercle (240) le long de la face extérieure (220) du manchon d'étanchéité (200) et compriment ou relâchent ainsi la seconde partie d'extrémité (202) du manchon d'étanchéité (200), **caractérisé en ce que** la pluralité d'éléments d'appui (300) ne sont pas raccordés les uns aux autres.

2. Dispositif de raccordement (100) selon la revendication 1, **caractérisé en ce que** l'élément d'appui (300) présente au moins une saillie de fixation (350) ou au moins un logement de fixation (360).

3. Dispositif de raccordement (100) selon la revendication 1 ou 2, **caractérisé en ce que** l'élément d'appui (300) présente au moins une saillie de retenue (370).

4. Dispositif de raccordement (100) selon l'une des revendications précédentes, **caractérisé en ce que** les éléments d'appui (300) sont identiques les uns aux autres.

5. Dispositif de raccordement (100) selon l'une des revendications précédentes, **caractérisé en ce que** la pluralité d'éléments d'appui (300) est au nombre de quatre, cinq, six, sept, huit, neuf, dix, onze, douze, treize, quatorze ou quinze.

6. Dispositif de raccordement (100) selon l'une des revendications précédentes, **caractérisé en ce que** le manchon d'étanchéité (200) présente, sur sa face intérieure (210), au moins une lèvre d'étanchéité (250) qui dépasse vers l'intérieur depuis la surface intérieure (210) et qui est agencée le long d'une courbe qui est réalisée continue entre un premier plan E1 et un second plan E2, et/ou **en ce que** le manchon d'étanchéité (200) présente, sur sa face intérieure (210), au moins une lèvre d'étanchéité (250) qui dépasse vers l'intérieur depuis la surface intérieure (210) et qui est agencée rectiligne dans un plan.

7. Dispositif de raccordement (100) selon l'une des revendications précédentes, **caractérisé en ce que** le manchon d'étanchéité (200) présente, sur sa face intérieure (210), au moins une rainure (260) dans laquelle est reçu un élément d'étanchéité (270) apte au gonflement.

8. Agencement comprenant un dispositif de raccordement (100) selon l'une des revendications 1 à 7 et un premier et un second tube, qui sont raccordés l'un à l'autre à l'aide du dispositif de raccordement (100), dans lequel, pour former le raccordement, une première de deux parties d'extrémité (201, 202) du manchon d'étanchéité (200) reçoit une partie d'extrémité de tube du premier tube et la seconde partie d'extrémité (202) reçoit une partie d'extrémité de tube du second tube, qui sont raccordés l'un à l'autre par le biais du manchon d'étanchéité (200).
